# EUROPEAN PATENT SPECIFICATION

(11) **EP 0 438 422 B1**
(45) Date of publication and mention of the grant of the patent: **02.11.1994**
(21) Application number: 89910091.1
(22) Date of filing: 12.08.1989
(51) Int. Cl.: B60Q 1/14, F21M 3/20

(54) **VEHICULAR HEADLIGHT**
SCHEINWERFER FÜR FAHRZEUGE
PHARE AVANT POUR VEHICULES

(43) Date of publication of application: 31.07.1991
(73) Proprietor: KODAK AKTIENGESELLSCHAFT, D-70323 Stuttgart (DE)
(72) Inventor: STROBEL, Joseph, R., D-7065 Winterbach (DE)
(74) Representative: Lewandowsky, Klaus, Dipl.-Ing.
(86) International application number: EP8900959
(87) International publication number: WO9102666

(56) References cited:
- DE-C- 250 574
- FR-A- 5 633 388
- US-A- 1 369 227
- US-A- 1 397 803

## Description

The invention relates to a vehicular headlight for selectively emitting a high beam or a low beam featuring a light distribution around the headlight axis different from that of the high beam, said headlight comprising a main reflector designed to form a cavity with a mirrored inner surface, a light source arranged in front of the mirrored surface of the main reflector, and at least one auxiliary reflector designed to form a second cavity with a mirrored inner surface and having smaller dimensions than the main reflector, said auxiliary reflector being arranged in the vicinity of the light source with its mirrored surface facing same such that it reflects light emitted by the light source onto an associated area of the mirrored surface of the main reflector.

A vehicular headlight of this type is disclosed in DE-PS 1 472 523. In the known headlight the light source cooperating with the mirrored surface of the auxiliary reflector is provided for producing the low beam only. For generating the high beam, the known headlight has a second light source which is spatially separated from the light source cooperating with the auxiliary reflector and, lying in the area of the headlight axis, is arranged in the space between the mirrored surface of the main reflector and the auxiliary reflector.

The known headlight has substantial disadvantages with respect to the desired homogeneous light distribution and high intensity of light of the light beams emitted. When the high beam is produced, part of the light reflected by the main reflector is blocked by the auxiliary reflector lying in the raypath, which results in a considerable attenuation and inhomogeneity of the high beam. When the low beam is produced, the light distribution leaves much to be desired because due to using a partial section (upper half) of the mirrored surface of the main reflector, which is also used for producing the high beam, the desired asymmetry of the low beam is not achieved.

DE-A-250 574 shows a headlight with an additional reflector rotatable around the light source. Claim 1 is demarcated against this document.

It is the object of the present invention to provide a vehicular headlight of the type considered which emits a low and a high beam of high light intensity and the desired light distribution and homogeneity.

According to the invention, the above object is attained in that the light source is provided for emitting both the high beam and the low beam and the position of the auxiliary reflector can be adjusted by means of an adjusting device and moved at least to a first position in which the light reflected by it towards the main reflector hits said main reflector in a first section of its mirrored surface provided for producing the low beam and said auxiliary reflector can also be moved to at least one second adjusting position in which the light reflected by it towards the main reflector hits said main reflector in a second surface section provided for producing the high beam.

The present invention uses a single light source which - according to the position of the auxiliary reflector adjusted - illuminates different sections of the mirrored surface of the main reflector. The engineer is now completely free to design such surface sections especially with respect to the requirements the light beam reflected by the respective surface sections must fulfil. In other words, it is up to the engineer to design the surface section used for emitting the low beam such that a low beam is produced which has optimal properties as to homogeneity, light distribution and/or asymmetry of the light/dark delimitation. On the other hand, the surface section used for the high beam can optimally be adapted to the requirements to be considered.

The use of a single light source not only means a reduction of the manufacturing and operating costs because a single lamp socket and wiring are necessary, but provides the additional advantage that as a light source also a type of lamp can be used which after switching on reaches its highest intensity of light emission only after a certain period of time, as this is for example the case with lamps operating according to the gas discharge or arc light principle. To date, lamps of this type have not been able to be used as high beam sources, because the high beam, when required, must be emitted with full intensity and without noticeable time delay.

According to claim 2, the sections of the mirrored surface of the main reflector used for the low and high beams are preferably designed as zones of different configuration.

A particularly effective optimization of the light distribution on the surfaces to be illuminated by the high and low beams is possible if according to claim 3 each of the sections of the mirrored surface of the main reflector is designed using the teaching disclosed in the international application PCT/EP 88/00196. Due to the asymmetry of the plurality of sections running through the main reflector each reflecting point of the mirrored surface of the main reflector illuminates a spot associated therewith on the surface to be illuminated. The shape of the respective sections of the mirrored surface of the main reflector is then calculated and/or determined in accordance with the teaching of the aforementioned international patent application such that for each spot of the surface to be illuminated the desired brightness and thus the desired homogeneity of light distribution and - in the case of the low beam - the desired position and asymmetry of the light/dark delimitation are achieved.

It is understood that the desired optical effects of the surface sections of the main reflector provided for the low and high beams can be achieved by using the teaching of the above mentioned international patent application applying the asymmetrical shapes of the mirrored surface section alone and/or by the mirrored surface sections and an additional optical lens element, e.g. a lens made of glass or plastic material arranged in the light exit area of the headlight, acting in combination.

In a preferred embodiment, the mirrored surface of the auxiliary reflector has a spherical shape. If the light source is arranged such that the light of the light source is imaged by the concave spherical mirror in the light source itself or somewhat offset, a maximum of light intensity both for the low and the high beam is reached because the light in its entirety is reflected towards the desired section of the main reflector except for the loss suffered by the reflection of the light in the concave mirror itself. For the adjustment of its position, the auxiliary reflector can be mounted for rotation about an axis both for an adjusting movement combined of a translational and a rotational movement or for a mere pivotal movement. Preferably the adjusting device used for positioning operates according to the electromotive principle, e.g. by using a rotary magnet, which provides for a reliable and fast adjustment of the position at very low structural effort.

The invention will now be explained in detail with reference to embodiments shown in the drawing.
- Figs. 1 and 2: show schematically simplified representations of a raypath of an embodiment in the low beam mode and the high beam mode, respectively, and
- Figs. 3 and 4: show schematically simplified perspective views of the rear portions of a second and third embodiment of the headlight, respectively.

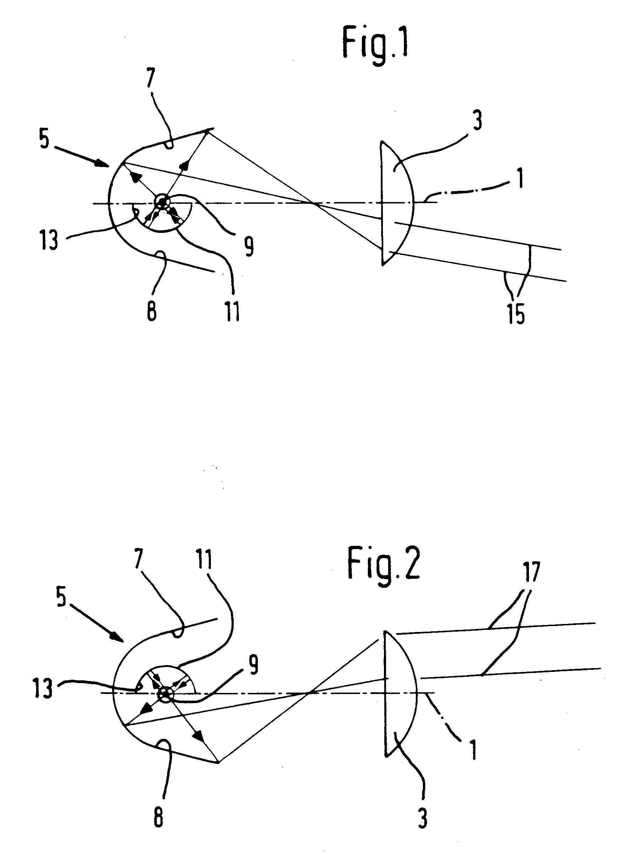

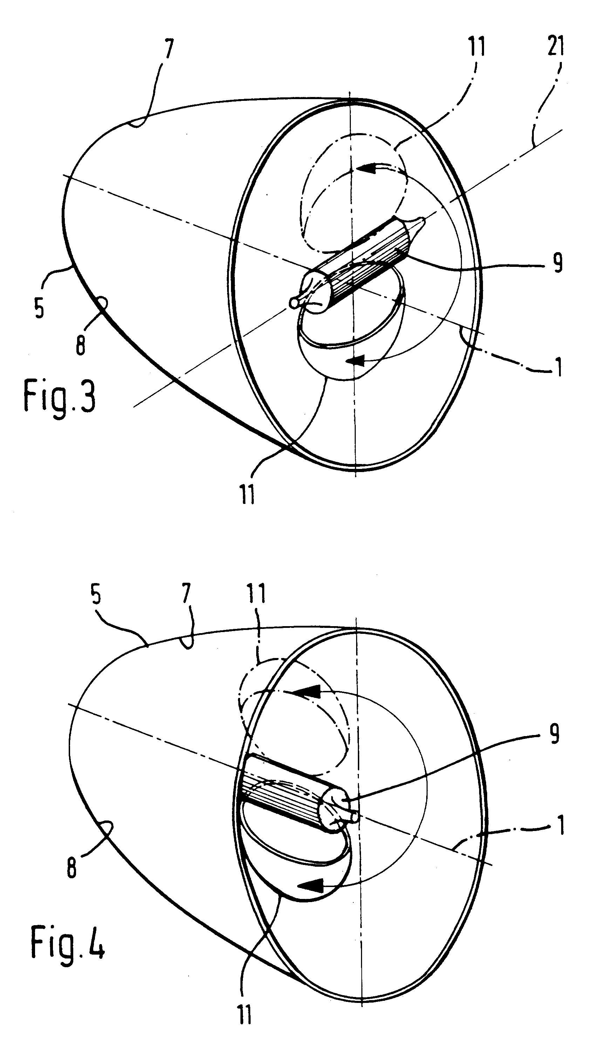

An embodiment of the headlight shown in Figs. 1 and 2 features in the front light exit area a lens 3 which is oriented substantially concentrically with respect to the headlight axis 1 and is made of glass. It is understood that a plastic lens or a light exit pane without optical effect could also be provided. On the other hand, lens 3 could also form a light exit pane, i.e. the front member of the headlight.

A main reflector 5 which, as seen in the direction of light incidence, is arranged in the rear area features an internal, mirrored surface which has a different shape in the surface section 7 above the headlight axis 1 than in the surface section 8 below the headlight axis 1. A lamp whose light source 9 is oriented at least approximately with respect to the headlight axis 1 is arranged in front of the mirrored surface of the main reflector 5.

An auxiliary reflector 11 which in the embodiment has the shape of a spherical, dome-shaped concave mirror the dimensions of which are considerably smaller than those of the main reflector 5 is adjustable so that it can be moved to a first position shown in Fig. 1 and to a second position shown in Fig. 2. In both positions light source 9 is arranged at least approximately in the area of the center of the curvature of the inner, spherical, mirrored surface 13 of the auxiliary reflector 11. In the embodiment according to Figs. 1 and 2 the auxiliary reflector 11 is adjusted from its first position shown in Fig. 1 to its second position shown in Fig. 2 by pivoting it about a horizontal axis intersecting the headlight axis 1 at right angles in the center of the curvature of the mirrored surface 13 of the auxiliary reflector 11. An adjusting device not shown in the drawing and featuring an electric motor drive is provided for producing the necessary 180° rotation between the first and second positions.

The first position of auxiliary reflector 11 shown in Fig. 1 is provided for producing a low beam 15. In this position, the light reflected by the mirrored surface 13 of auxiliary reflector 11 and directed to the main reflector 5 hits said main reflector exclusively in the upper surface section designated 7, that's to say in the same section to which also the non-reflected light is directed, i.e. the light emitted by light source 9 and reaching directly the main reflector 5. The upper surface section 7 of the mirrored surface of the main reflector 5 illuminated when the auxiliary reflector 11 is in its first position is formed such that in combination with lens 3 it produces the low beam 15 with exactly the desired light distribution on the surface to be illuminated. Due to the spherical shape of the mirrored surface 13 of auxiliary reflector 11 and the arrangement of light source 9 substantially in the center of curvature of surface 13, the rays of light source 9 impinging on surface 13 are practically reflected upon themselves, that's to say in the center of curvature of auxiliary reflector 11 an inverted and non-enlarged image of the light source is produced in the same focal plane in which also the light source is arranged. If light source 9 is a filament, it is recommended leaving a slight space between the center of curvature of mirrored surface 13 and the position of light source 9 so that the reflected image is produced directly beside the filament or, if the filament is coarsely wound, in the spaces between its windings.

In the position of auxiliary reflector 11 shown in Fig. 2 a high beam 17 is produced and thereby the lower surface section of the main reflector 5 is illuminated exclusively. Section 8 is designed particularly with respect to producing the high beam 17 and under the consideration of the optical effect of lens 3. Both the upper section 7 and the lower section 8 of the mirrored surface of main reflector 5 may also be designed such that the low beam 15 or the high beam 17 is produced without using the optical effect of lens 3 if in lieu of a lens a headlight pane without optical effect is used.

As is apparent from Figs. 1 and 2, the portions of the low beam 15 and the high beam 17 produced by reflection only penetrate the lower and upper section of lens 3, respectively. For this reason, lens 3 may be differently designed in said two sections so that in combination with the two surface sections 7 and 8, respectively, optimal light distribution is obtained in both cases.

In the embodiment according to Figs. 1 and 2 the auxiliary reflector 11 is hemispherically shaped. This is not compulsory. A different, perhaps irregularly extending marginal zone of the auxiliary reflector 11 could be selected to produce a particular shape of the light/dark delimitation of the low beam 15 which depends on the shape and position of the margin of auxiliary reflector 11 when in its first position. In lieu of the first and the second positions shown in Figs. 1 and 2, respectively, other positions of the auxiliary reflector 11 could also be used, e.g. positions in which the marginal zone of the auxiliary reflector - possibly in only one of the two positions of the auxiliary reflector - lies above or below the headlight axis 1 at a certain distance therefrom. In lieu of the straight and horizontal course of the margin of auxiliary reflector 11 shown in Figs. 1 and 2, the margin could also extend at an angle relative to the horizontal plane in at least one of the positions or in different marginal zones it could be spaced irregularly from the horizontal plane including the headlight axis 1. In such cases, in addition to the light reflected by the main reflector 5, also light reflected by the mirrored surface 13 of auxiliary reflector 11 could, without being reflected any further by the main reflector 5, directly leave the headlight as a component of the light beam emitted.

Instead of a single auxiliary reflector 11, there could be provided two auxiliary reflectors which, if required, could be mounted for movement relative to each other and could be moved to positions such that in one of such positions a major portion of or the complete amount of light of light source 9 reflected by the surface 13 directly forms the light beam emitted without having been reflected by the main reflector 5.

Fig. 3 shows a second embodiment having an elongated or tubular light source 9 extending at right angles relative to the headlight axis 1. To adjust the required position - the first position being shown in full lines, the second position in dash-dotted lines - the auxiliary reflector 11 of this embodiment must be pivoted about an axis 21 which extends horizontally, intersects the headlight axis 1 at right angles and coincides with the longitudinal axis of light source 9.

The embodiment according to Fig. 4 uses a light source 9 corresponding to that of Fig. 3 the longitudinal axis of which however substantially coincides with the headlight axis 1. In this embodiment, the auxiliary reflector 11 can be pivoted about an axis coinciding with headlight axis 1 from its first position shown in full lines to its second position shown in dash-dotted lines.

In other embodiments not shown in the drawing the pivotal axis of auxiliary reflector 11 can also be displaced normal to itself so that in both positions of the auxiliary reflector the image of the light source produced by it can be moved on different sides to the immediate vicinity of said pivotal axis.

The above description and the drawing are limited to the statement of features essential for the embodiment of the invention by way of example. As far as the features are disclosed in the description and the drawing and not mentioned in the claims, they also serve - if required - for determining the subject of the invention.

## Claims

1. A vehicular headlight for selectively emitting a high beam (17) or a low beam (15) featuring a light distribution around the headlight axis (1) different from that of the high beam, said headlight comprising
a) a main reflector (5) designed to form a cavity with a mirrored inner surface,
b) a light source (9) arranged in front of the mirrored surface of the main reflector (5), and
c) at least one auxiliary reflector (11) designed to form a second cavity with a mirrored inner surface (13) and having smaller dimensions than the main reflector (5), said auxiliary reflector being arranged in the vicinity of the light source (9) with its mirrored surface (13) facing same such that it reflects light emitted by the light source (9) onto an associated area of the mirrored surface of the main reflector (5),
d) the auxiliary reflector (11) can be adjusted by means of an adjusting device and moved at least to a first and a second position,
**characterized** in that
e) the light source (9) is provided for emitting both the high beam (17) and the low beam (15), and that
f) in the first position the light reflected by it towards the main reflector (5) hits said main reflector in a first section (7) of its mirrored surface provided for producing the low beam (15), and in the second position the light reflected by it towards the main reflector (5) hits said main reflector in a second surface section (8) provided for producing the high beam (17).

2. Headlight as described in claim 1, characterized in that the mirrored surface of the main reflector (5) is divided into at least two zones of different configuration of which the one that is illuminated by the auxiliary reflector (11) when in its first position is designed as a first section (7) for producing the low beam (15), and the other which is illuminated by the auxiliary reflector (11) when in its second position is designed as a second section (8) for producing the high beam (17).

3. Headlight as described in claim 2, characterized in that each of the two sections (7 and 8) of the mirrored surface of the main reflector (5) is designed such that the longitudinal sections running through the headlight axis (1) and the cross-sections normal to said axis (1) extend asymmetrically to the headlight axis (1).

4. Headlight as described in any of claims 1 thru 3, characterized in that at least the larger portion of the first section (7) of the mirrored surface of the main reflector (5) lies above the horizontal plane including the headlight axis (1) and in that at least the larger portion of the second section (8) of the mirrored surface of the main reflector (5) lies below said horizontal plane.

5. Headlight as described in any of claims 1 thru 4, characterized in that the mirrored surface (13) of the auxiliary reflector (11) is spherically shaped.

6. Headlight as described in claim 5, characterized in that at least one position of the auxiliary reflector (11) is selected such that the image of the light source (9) produced by the auxiliary reflector (11) lies in the area of said source (9).

7. Headlight as described in claim 5, characterized in that in at least one position of the auxiliary reflector (11) the image of the light source (9) lies slightly offset said source (9).

8. Headlight as described in any of claims 1 thru 7, characterized in that the auxiliary reflector (11) can be pivoted about a rotational axis (21) to vary its position.

9. Headlight as described in claim 8, characterized in that the rotational axis (21) extends horizontally.

10. Headlight as described in claim 9, characterized in that the rotational axis (21) lies in the horizontal plane including the headlight axis (1).

11. Headlight as described in any of claims 8 thru 10, characterized in that the rotational axis (21) and the headlight axis (1) form an angle of 90°.

12. Headlight as described in any of claims 8 thru 10, characterized in that the rotational axis (21) extends parallel to the headlight axis (1).

13. Headlight as described in any of claims 8 thru 12, characterized in that for varying the position of the auxiliary reflector (11) the rotational axis (21) is displaceable.

14. Headlight as described in any of claims 1 thru 13, characterized in that at least one optical lens element is arranged in the raypath of the light emitted by the mirrored surface of the main reflector (5).

15. Headlight as described in claim 14, characterized in that the optical lens element comprises two differently designed areas for the high and the low beam (17,15).

16. Headlight as described in claim 15, characterized in that the optical lens element is a lens (3) manufactured of glass or plastic material and spatially associated with the front member of the headlight.

17. Headlight as described in any of claims 1 thru 16, characterized in that the adjusting device for the auxiliary reflector (11) is provided with a rotary magnet.

## Patentansprüche

1. Fahrzeugscheinwerfer für die wahlweise Abgabe eines Fernlichtbündels (17) oder eines demgegenüber eine andere Lichtverteilung um die Scheinwerferachse (1) aufweisenden Abblendlichtbündels (15), mit
a) einem Hauptreflektor (5) in Form eines Hohlkörpers mit spiegelnder, innerer Fläche,
b) einer vor der spiegelnden Fläche des Hauptreflektors (5) angeordneten Lichtquelle (9) und
c) mindestens einem Hilfsreflektor (11) in Form eines zweiten Hohlkörpers mit spiegelnder innerer Flache (13), der kleinere Abmessungen als der Hauptreflektor (5) aufweist und in der Nähe der Lichtquelle (9) mit dieser zugewandter spiegelnder Fläche (13) so angeordnet ist, daß er von der Lichtquelle (9) abgestrahltes Licht auf einen zugeordneten Bereich der spiegelnden Fläche des Hauptreflektors (5) wirft,
d) wobei der Hilfsreflektor (11) mittels einer Verstelleinrichtung verstellbar ist und mindestens in eine erste und zweite Einstellage bewegbar ist,
**dadurch gekennzeichnet**,
e) daß die Lichtquelle (9) sowohl für die Abgabe des Fernlichtbündels (17) als auch des Abblendlichtbündels (15) vorgesehen ist und
f) daß in der ersten Einstellage das vom Hilfsreflektor zum Hauptreflektor (5) geworfene Licht diesen in einem zur Erzeugung des Abblendlichtbündels (15) vorgesehenen ersten Flächenabschnitt (7), und in der zweiten Einstellage das vom Hilfsreflektor zum Hauptreflektor (5) geworfene Licht diesen in einem für die Erzeugung des Fernlichtbündels (17) vorgesehenen zweiten Flächenabschnitt (8) seiner spiegelnden Fläche trifft.

2. Fahrzeugscheinwerfer nach Anspruch 1, dadurch gekennzeichnet, daß die spiegelnde Fläche des Hauptreflektors (5) in zumindest zwei Zonen unterschiedlicher Formgebung unterteilt ist, von denen die bei in der ersten Einstellage befindlichem Hilfsreflektor (11) von diesem beleuchtete Zone als erster Abschnitt (7) zur Erzeugung des Abblendlichtbündels (15) und die andere, bei in der zweiten Einstellage des Hilfsreflektors (11 von diesem beleuchtete Zone als zweiter Abschnitt (8) zur Erzeugung des Fernlichtbündels (17) ausgebildet sind.

3. Fahrzeugscheinwerfer nach Anspruch 2, dadurch gekennzeichnet, daß jeder der beiden Abschnitte (7 und 8) der spiegelnden Fläche des Hauptreflektors (5) so gestaltet ist, daß die durch die Scheinwerferachse (1) gelegten Längsschnitte und zu dieser senkrecht gelegten Querschnitte asymmetrisch zur Scheinwerferachse (1) verlaufen.

4. Fahrzeugscheinwerfer nach einem der Ansprüche 1 bis 3, dadurch gekennzeichnet, daß zumindest der Großteil des ersten Abschnittes (7) der spiegelnden Fläche des Hauptreflektors (5) oberhalb der die Scheinwerferachse (1) enthaltenden Horizontalebene und zumindest der Großteil des zweiten Abschnitts (8) der spiegelnden Fläche des Hauptreflektors (5) unterhalb dieser Horizontalebene gelegen sind.

5. Fahrzeugscheinwerfer nach einem der Ansprüche 1 bis 4, dadurch gekennzeichnet, daß die spiegelnde Fläche (13) des Hilfsreflektors (11) eine sphärische Form hat.

6. Fahrzeugscheinwerfer nach Anspruch 5, dadurch gekennzeichnet, daß zumindest eine Einstellage des Hilfsreflektors (11) so gewählt ist, daß die vom Hilfsreflektor (11) erzeugte Abbildung der Lichtquelle (9) im Bereich derselben gelegen ist.

7. Fahrzeugscheinwerfer nach Anspruch 5, dadurch gekennzeichnet, daß bei zumindest einer Einstellage des Hilfsreflektors (11) die Abbildung der Lichtquelle (9) in geringem Abstand neben dieser gelegen ist.

8. Fahrzeugscheinwerfer nach einem der Ansprüche 1 bis 7, dadurch gekennzeichnet, daß der Hilfsreflektor (11) zur Veränderung seiner Einstellage um eine Drehachse (21) schwenkbar gelagert ist.

9. Fahrzeugscheinwerfer nach Anspruch 8, dadurch gekennzeichnet, daß die Drehachse (21) horizontal ist.

10. Fahrzeugscheinwerfer nach Anspruch 9, dadurch gekennzeichnet, daß die Drehachse (21) in der die Scheinwerferachse (1) enthaltenden Horizontalebene gelegen ist.

11. Fahrzeugscheinwerfer nach einem der Ansprüche 8 bis 10, dadurch gekennzeichnet, daß die Drehachse (21) mit der Scheinwerferachse (1) einen Winkel von 90° bildet.

12. Fahrzeugscheinwerfer nach einem der Ansprüche 8 bis 10, dadurch gekennzeichnet, daß die Drehachse zur Scheinwerferachse (1) parallel ist.

13. Fahrzeugscheinwerfer nach einem der Ansprüche 8 bis 12, dadurch gekennzeichnet, daß die Drehachse zur Veränderung der Einstellage des Hilfsreflektors zusätzlich verschiebbar ist.

14. Fahrzeugscheinwerfer nach einem der Ansprüche 1 bis 13, dadurch gekennzeichnet, daß im Lichtweg des von der spiegelnden Fläche des Hauptreflektors (5) abgestrählten Lichtbündels zumindest ein optisches Linsenelement angeordnet ist.

15. Fahrzeugscheinwerfer nach Anspruch 14, dadurch gekennzeichnet, daß das optische Linsenelement zwei verschieden gestaltete Bereiche für das Fern- und Abblendlichtbündel (17, 15) aufweist.

16. Fahrzeugscheinwerfer nach Anspruch 15, dadurch gekennzeichnet, daß als optisches Linsenelement eine der vorderen Abdeckung des Scheinwerfers räumlich zugeordnete Linse (3) aus Glas oder Kunststoff vorgesehen ist.

17. Fahrzeugscheinwerfer nach einem der Ansprüche 1 bis 16, dadurch gekennzeichnet, daß die Verstelleinrichtung für den Hilfsreflektor (11) einen Drehmagneten aufweist.

## Revendications

1. Phare pour véhicule, destiné à émettre sélectivement un faisceau supérieur (17) et un faisceau inférieur (15) donnant une distribution lumineuse autour de l'axe du phare (1) différente de celle du faisceau supérieur, le phare comprenant :
a) un réflecteur principal (5) destiné à former une cavité ayant une surface interne réfléchissante,
b) une source lumineuse (9) placée en avant de la surface réfléchissante du réflecteur principal (5), et
c) au moins un réflecteur auxiliaire (11) destiné à former une seconde cavité ayant une surface interne réfléchissante (13) et ayant des dimensions inférieures à celles du réflecteur principal (5), le réflecteur auxiliaire étant disposé au voisinage de la source lumineuse (9) avec sa surface réfléchissante (13) tournée de manière qu'elle réfléchisse la lumière émise par la source lumineuse (9) sur une région associée de la surface réfléchissante du réflecteur principal (5),
d) le réflecteur auxiliaire (11) pouvant être ajusté à l'aide d'un dispositif d'ajustement et être déplacé au moins à une première et une seconde position,
caractérisé en ce que :
e) la source lumineuse (9) est destinée à émettre à la fois le faisceau supérieur (17) et le faisceau inférieur (15), et en ce que
f) dans sa première position, la lumière qu'il réfléchit vers le réflecteur principal (5) frappe ce réflecteur principal dans un premier tronçon (7) de sa surface réfléchissante destiné à donner le faisceau inférieur (15) et, dans sa seconde position, la lumière qu'il réfléchit vers le réflecteur principal (5) vient frapper le réflecteur principal dans un second tronçon de surface (8) destiné à former le faisceau supérieur (17).

2. Phare selon la revendication 1, caractérisé en ce que la surface réfléchissante du réflecteur principal (5) est divisée en au moins deux zones de configurations différentes dont la première, qui est éclairée par le réflecteur auxiliaire (11) lorsqu'il occupe sa première position, est réalisée sous forme du premier tronçon (7) destiné à produire le faisceau inférieur (15), et l'autre, qui est éclairée par le réflecteur auxiliaire (11) lorsqu'il occupe sa seconde position, est destinée à former un second tronçon (8) destiné à produire le faisceau supérieur (17).

3. Phare selon la revendication 2, caractérisé en ce que chacun des deux tronçons (7 et 8) de la surface réfléchissante du réflecteur principal (5) est réalisé de manière que les sections longitudinales passant par l'axe du phare (1) et la section perpendiculaire à l'axe (1) soient disposées asymétriquement par rapport à l'axe du phare (1).

4. Phare selon l'une quelconque des revendications 1 à 3, caractérisé en ce que la plus grande partie au moins du premier tronçon (7) de la surface réfléchissante du miroir principal (5) est placée au-dessus du plan horizontal contenant l'axe du phare (1), et en ce que la plus grande partie au moins du second tronçon (8) de la surface réfléchissante du réflecteur principal (5) se trouve au-dessous de ce plan horizontal

5. Phare selon l'une des revendications 1 à 4, caractérisé en ce que la surface réfléchissante (13) du réflecteur auxiliaire (11) a une configuration sphérique.

6. Phare selon la revendication 5, caractérisé en ce qu'une position au moins du réflecteur auxiliaire (11) est sélectionnée afin que l'image de la source lumineuse (9) produite par le réflecteur auxiliaire (11) se trouve dans la région de la source (9).

7. Phare selon la revendication 5, caractérisé en ce que, dans une position au moins du réflecteur auxiliaire (11), l'image de la source lumineuse (9) est légèrement décalée par rapport à la source (9).

8. Phare selon l'une des revendications 1 à 7, caractérisé en ce que le réflecteur auxiliaire (11) peut pivoter autour d'un axe de rotation (21) afin que sa position varie.

9. Phare selon la revendication 8, caractérisé en ce que l'axe de rotation (21) est disposé horizontalement.

10. Phare selon la revendication 9, caractérisé en ce que l'axe de rotation (21) se trouve dans le plan horizontal qui contient l'axe du phare (1).

11. Phare selon l'une des revendications 8 à 10, caractérisé en ce que l'axe de rotation (21) et l'axe du phare (1) forment un angle de 90°.

12. Phare selon l'une des revendications 8 à 10, caractérisé en ce que l'axe de rotation (21) est parallèle à l'axe du phare (1).

13. Phare selon l'une des revendications 8 à 12, caractérisé en ce que, pour que la position du réflecteur auxiliaire (11) puisse varier, l'axe de rotation (21) peut être déplacé.

14. Phare selon l'une des revendications 1 à 13, caractérisé en ce qu'un élément au moins formant lentille optique est placé sur le trajet des rayons de la lumière provenant de la surface réfléchissante du réflecteur principal (5).

15. Phare selon la revendication 14, caractérisé en ce que l'élément formant lentille optique comprend deux régions réalisées différemment pour le faisceau supérieur et le faisceau inférieur (17, 15).

16. Phare selon la revendication 15, caractérisé en ce que l'élément de lentille optique est une lentille (3) formée de verre ou de matière plastique et associée dans l'espace à l'organe avant du phare.

17. Phare selon l'une des revendications 1 à 16, caractérisé en ce que le dispositif d'ajustement du réflecteur auxiliaire (11) est muni d'un aimant rotatif.
